# EUROPÄISCHE PATENTSCHRIFT

(11) **EP 1 199 761 B1**
(45) Veröffentlichungstag und Bekanntmachung des Hinweises auf die Patenterteilung: **12.07.2006**
(21) Anmeldenummer: 01123019.0
(22) Anmeldetag: 26.09.2001
(51) Int. Cl.: H01M 8/06, B60L 11/18

(54) **Brennstoffzellensystem für ein Kraftfahrzeug**
Fuel cell system for a motor vehicle
Système de pile à combustible pour un véhicule automobile

(30) Priorität: 18.10.2000 DE 10051664
(43) Veröffentlichungstag der Anmeldung: 24.04.2002
(73) Patentinhaber: NuCellSys GmbH, 73230 Kirchheim/Teck-Nabern (DE)
(72) Erfinder: Boneberg, Stefan, 72660 Beuren (DE); Karl, Martin, 73272 Neidlingen (DE); Röser, Thomas, Dr., 73265 Dettingen/Teck (DE); Schüssler, Martin, Dr., 89073 Ulm (DE); zur Megede, Detlef, Dr., 73230 Kirchheim/Teck (DE)
(74) Vertreter: Finkele, Rolf

(56) Entgegenhaltungen:
- EP-A- 0 677 417
- WO-A-02/22234

## Beschreibung

Die Erfindung betrifft ein Brennstoffzellensystem für ein Kraftfahrzeug, mit wenigstens einer Brennstoffzelle und mit einem Gaserzeugungssystem.

Ein gattungsgemäßes Brennstoffzellensystem ist aus der DE 198 47 985 C1 bekannt. Hierbei wird in einem Behälter zur Aufnahme eines Betriebsmittels für den Betrieb der Brennstoffzelle die Anordnung eines Durchlaßmittels vorgeschlagen, wodurch der Behälter zur Aufnahme des Betriebsmittels auch für Methanol mit geringem Reinheitsgrad geeignet sein soll.

Aus der EP 0 677 417 A1 ist der Einsatz eines Luftfilters in einem mit einer Brennstoffzelle ausgestatteten Fahrzeug bekannt.

Die Filtration von Luft, welche der Brennstoffzelle zugeführt wird, ist außerdem in der GB 2 250 130 A beschrieben.

Beim Einsatz von mit solchen Brennstoffzellensystemen ausgestatteten Kraftfahrzeugen im Straßenverkehr wurden häufig Schwierigkeiten im Gaserzeugungssystem oder auch in der Brennstoffzelle selbst festgestellt, ohne daß die eigentliche Ursache hierfür ermittelt werden konnte. Häufig stehen diese Schwierigkeiten im Zusammenhang mit einer unzufriedenstellend kurzen Lebensdauer der Katalysatoren in den Komponenten des Gaserzeugungssystems solcher Brennstoffzellenanlagen, was wiederum zu Versuchen führte, neuartige Konstruktionen bzw. Beschichtungen zu entwickeln. Dadurch konnten jedoch weder die Ursache der genannten Probleme noch die Probleme selbst beseitigt werden.

In überraschender Weise wurde nun jedoch festgestellt, daß die Katalysatoren durch sogenannte Katalysatorgifte, wie z.B. Kohlenwasserstoffe oder Chloride, beschädigt bzw. zerstört werden. Die Konsequenz aus dieser Feststellung war die Erkenntnis, daß die genannten Verunreinigungen in der angesaugten, von dem Brennstoffzellensystem benötigten Luft enthalten sein müssen. Chloride können insbesondere im Winter häufiger in den Komponenten mit den Katalysatoren festgestellt, welche mit sehr großer Wahrscheinlichkeit aufgrund der Salzstreuung auf den Straßen in die Ansaugluft gelangen konnten. Dabei können etwa Dämpfe von Kohlenwasserstoffen, vor allem hochsiedenden Kohlenwasserstoffen, sowohl in der angesaugten Luft als Verunreinigung vorliegen als auch im Fahrzeug selbst, z.B. in Form von Kompressorenöl, in die Luft gelangen. Wie bereits oben erwähnt, zerstören solche Katalysatorgifte die im Gaserzeugungssystem notwendigen Katalysatoren, was nicht nur zu einer verkürzten Lebensdauer, sondern auch zu potentiellen Ausfällen solcher mit Brennstoffzellensystemen versehenen Fahrzeuge führt. Des weiteren greifen die genannten Substanzen auch die Membranen der einzelnen Brennstoffzellen an und beeinträchtigen deren Funktionsweise.

Es ist daher Aufgabe der vorliegenden Erfindung, ein Brennstoffzellensystem für ein Kraftfahrzeug zu schaffen, bei dem die Brennstoffzelle selbst bzw. das Gaserzeugungssystem mit Ansaugluft versorgt wird, welche keine schädliche Wirkung auf Bestandteile des Brennstoffzellensystems besitzt.

Erfindungsgemäß wird diese Aufgabe durch die im kennzeichnenden Teil von Anspruch 1 genannten Merkmale gelöst.

Durch die erfindungsgemäße Einrichtung zur Reinigung der Ansaugluft mit dem wenigstens einen Element zur Adsorption von Ionen und von Kohlenwasserstoffen werden die genannten Stoffe, welche äußerst schädlich für die Katalysatoren und oder Membranen solcher Brennstoffzellensysteme sind, vor dem Eintritt in ein Gaserzeugungssystem bzw. in die Brennstoffzelle aus der Ansaugluft entzogen und es werden Beschädigungen vermieden. Auf diese Weise kann ein störungsfreier Betrieb des Brennstoffzellensystem gewährleistet werden.

Insbesondere beim Einsatz von Kraftfahrzeugen mit Brennstoffzellenantrieben auf winterlichen Straßen ist eine solche Reinigungseinrichtung äußerst vorteilhaft, da die durch das Streusalz in die Ansaugluft gelangenden Chloride auf diese Weise unschädlich gemacht werden können. Jedoch ist es auch beim Einsatz von Fahrzeugen in einem Umfeld mit einem verhältnismäßig hohen Ölgehalt in der Luft, beispielsweise beim Einsatz von Gabelstaplern in Lagerhallen, für die Lebensdauer des gesamten Brennstoffzellensystems sehr vorteilhaft, eine solche erfindungsgemäße Einrichtung einzusetzen, wenn dadurch hochsiedende Kohlenwasserstoffe, also Fette, aus der Ansaugluft entfernt werden.

Als besonders vorteilhaft zur Entfernung von Anionen und/oder Kationen, wie z.B. Chloriden oder Natriumionen, haben sich Ionenaustauscherharze erwiesen, die in einer vorteilhaften Ausgestaltung der Erfindung ein Element der Einrichtung zur Reinigung der Ansaugluft bilden können.

Ein anderes Element der Einrichtung zur Reinigung der Ansaugluft kann in einer weiteren vorteilhaften Ausgestaltung der Erfindung ein Aktivkohleelement sein, welches in der Lage ist, Kohlenwasserstoffe aus der Ansaugluft zu entfernen.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Es zeigt:
- Fig. 1: ein schematisch dargestelltes Brennstoffzellensystem für ein Kraftfahrzeug mit einer erfindungsgemäßen Einrichtung zur Reinigung der Ansaugluft;
- Fig. 2: eine Einrichtung zur Reinigung der Ansaugluft in einem ersten Ausführungsbeispiel;
- Fig. 3: eine Einrichtung zur Reinigung der Ansaugluft in einem zweiten Ausführungsbeispiel; und
- Fig. 4: eine Einrichtung zur Reinigung der Ansaugluft in einem dritten Ausführungsbeispiel.

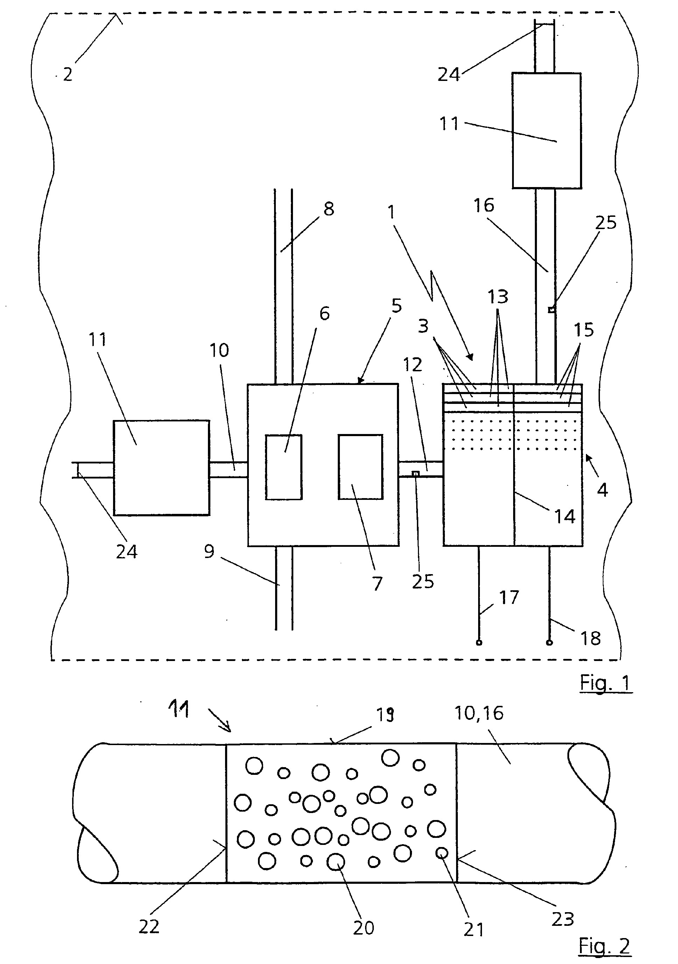

Fig. 1 zeigt ein Brennstoffzellensystem 1 für ein nur teilweise und nur mit gestrichelten Linien angedeutetes Kraftfahrzeug 2. Das Brennstoffzellensystem 1 weist einen in bekannter Weise aus mehreren Brennstoffzellen 3 bestehenden Brennstoffzellen-Stack 4 sowie ein Gaserzeugungssystem 5 auf, in dem in ebenfalls an sich bekannter Weise aus Methanol und Wasser wasserstoffhaltiges Gas für den Brennstoffzellen-Stack 4 erzeugt wird.

Innerhalb des Gaserzeugungssystems 5 befinden sich neben verschiedenen anderen an sich bekannten Bauteilen auch ein Reformer 6 und ein katalytischer Brenner 7. Das Gaserzeugungssystem 5, dessen genaue Funktionsweise im folgenden nicht näher beschrieben werden soll, ist mit einer Zuleitung 8 für Wasser und einer Zuleitung 9 für Methanol versehen. Des weiteren führt eine Luftzuleitung 10 zu dem Gaserzeugungssystem 5, in der sich eine Einrichtung 11 zur Reinigung der Ansaugluft befindet, die zu einem späteren Zeitpunkt detaillierter beschrieben wird.

Von dem Gaserzeugungssystem 5 führt zu dem Brennstoffzellen-Stack 4 eine Zuleitung 12, über welche das erzeugte wasserstoffhaltige Gas transportiert wird. Die Zuleitung 12 für das wasserstoffhaltige Gas tritt in die Anodenräume 13 der Brennstoffzellen 3 ein, wohingegen in die von den Anodenräumen 13 durch eine protonenleitende Membran 14 abgetrennten Kathodenräumen 15 eine Zuleitung 16 für Luft eintritt. Auch in der Zuleitung 16 zur Zuführung von Luft zu den Kathodenräumen 15 befindet sich die bereits oben beschriebene Einrichtung 11 zur Reinigung der Ansaugluft. Von den Anodenräumen 13 und den Kathodenräumen 15 geht jeweils eine elektrische Leitung 17 bzw. 18 aus, an der der von den einzelnen Brennstoffzellen 3 bzw. von dem Brennstoffzellen-Stack 4 erzeugte Strom abgenommen wird.

In Fig. 2 ist ein erstes Ausführungsbeispiel der Einrichtung 11 zur Reinigung der Ansaugluft dargestellt, die sich in einer oder auch in beiden Zuleitungen 10 bzw. 16 befinden kann. So weist die Einrichtung 11 zur Reinigung der Ansaugluft ein an den Durchmesser der jeweiligen Zuleitung 10 bzw. 16 angepaßtes Gehäuse 19 auf, in dem ein Element 20 zur Adsorption von Ionen aus der Ansaugluft angeordnet ist, nämlich ein aus Ionenaustauscherharz bestehendes Ionenaustauscherelement 20. In dem Gehäuse 19 befindet sich des weiteren ein Element 21 zur Adsorption von Kohlenwasserstoffen aus der Ansaugluft, welches als Aktivkohleelement 21 ausgebildet ist.

Das Ionenaustauscherelement 20 und das Aktivkohleelement 21 sind in dem Gehäuse 19 in Form einer Schüttung untergebracht, wobei das Ionenaustauscherelement 20 Ionenaustauscherharzkugeln aufweist und das Aktivkohleelement 21 in Granulatform bzw. als Pellets vorliegt. Alternativ hierzu wäre auch denkbar, das Ionenaustauscherelement 20 in Form einer Beschichtung eines Ionenaustauscherharzes auszubilden, welches auf einem Trägerelement mit großer Oberfläche angeordnet wäre. Das Gehäuse 19 ist an beiden Seiten durch Verschlußgitter 22 und 23 verschlossen.

Statt der beschriebenen Ausführung in Form einer gemischten Schüttung des Ionenaustauscherelementes 20 und des Aktivkohleelementes 21 ist selbstverständlich auch eine Einrichtung 11 denkbar, bei der die beiden Elemente 20 und 21 in mehreren Schichten bzw. Zonen vorliegen.

Mit dem Ionenaustauscherelement 20 ist es möglich, aus der Ansaugluft sämtliche Anionen, wie z.B. Chloride, und sämtliche Kationen, wie z.B. Natriumionen, zu entfernen. Selbstverständlich ist es in diesem Zusammenhang auch möglich, für Anionen und für Kationen jeweils separate Ionenaustauscherelemente 20 zu verwenden. Das Aktivkohleelement 21 dient dagegen zur Entfernung von Kohlenwasserstoffen, insbesondere von hochsiedenden Kohlenwasserstoffen, also Fetten und Ölen, aus der Ansaugluft, wobei das Ionenaustauscherelement 20 und das Aktivkohleelement 21 voneinander unabhängig arbeiten.

Um das Eindringen von groben, insbesondere mechanischen, Verunreinigungen in die Reinigungseinrichtung 11 zu verhindern, ist in Strömungsrichtung der Ansaugluft vor dem Ionenaustauscherelement 20 bzw. vor dem Aktivkohleelement 21 ein Filterelement 24 angeordnet. Des weiteren befindet sich in Strömungsrichtung der Ansaugluft nach der Einrichtung 11 zur Reinigung der Ansaugluft ein Sensor 25, mit dem die Menge an Ionen und/oder Kohlenwasserstoffen in der Ansaugluft gemessen werden kann. Dadurch ergibt sich eine Möglichkeit, die Reinigungswirkung der Einrichtung 11 bzw. ihrer Elemente 20 und 21 zu bestimmen und diese gegebenenfalls auszutauschen. Eine andere Möglichkeit, speziell die Reinigungswirkung des Ionenaustauscherelementes 20 festzustellen kann beispielsweise dadurch gegeben sein, daß das Ionenaustauscherelement 20 je nach Beladungszustand seine Farbe ändert.

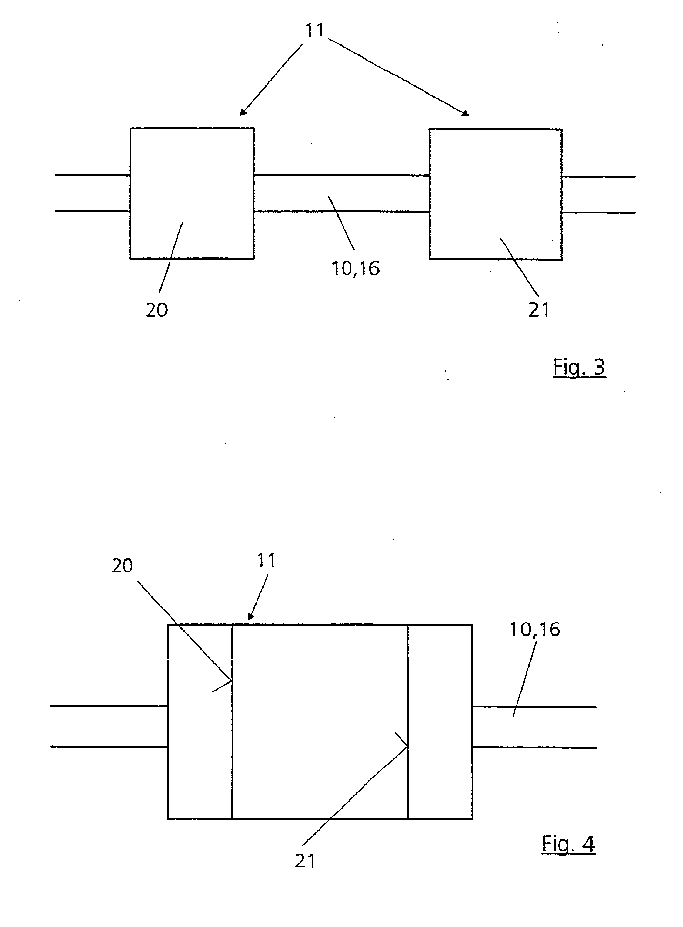

Fig. 3 zeigt eine weitere Ausführungsform der Einrichtung 11 zur Reinigung der Ansaugluft in einer oder in beiden Zuleitung 10 bzw. 16, wobei die Elemente 20 und 21 wiederum als Ionenaustauscherelement 20 und als Aktivkohleelement 21 ausgebildet sind. Jedoch sind im Gegensatz zu der Ausführungsform gemäß Fig. 2 die beiden Elemente 20 und 21 räumlich voneinander getrennt, wobei in Strömungsrichtung der Ansaugluft zunächst das Ionenaustauscherelement 20 und anschließend das Aktivkohleelement 21 angeordnet ist. Diese Anordnung dient dazu, zunächst die Ionen aus der Ansaugluft zu entfernen und erst kurz vor dem Gaserzeugungssystem 5 bzw. dem Brennstoffzellen-Stack 4 die hochsiedenden Kohlenwasserstoffe, welche eventuell durch verschiedene Einrichtungen in Strömungsrichtung nach dem Ionenaustauscherelement 20 in die Ansaugluft gelangen können.

Eine weitere Ausführung der Einrichtung 11 zur Reinigung der Ansaugluft ist in Fig. 4 dargestellt. Hierbei sind die Elemente 20 und 21 jeweils als semipermeable Membranen 20 und 21 ausgebildet, die für Luft durchlässig sind. Die Membran 20 verhindert jedoch das Weiterströmen von Ionen, wohingegen die Membran 21 Kohlenwasserstoffe zurückhält, wodurch wie bei den oben beschriebenen Ausführungsbeispielen ebenfalls eine Reinigung der Ansaugluft in den Zuleitungen 10 bzw. 16 gegeben ist.

In einer nicht dargestellten Ausführungsform könnte das Ionenaustauscherelement 20 auch als elektrostatisches oder als kapazitives Ionenaustauscherelement 20 ausgebildet sein.

## Patentansprüche

1. Brennstoffzellensystem für ein Kraftfahrzeug, mit wenigstens einer Brennstoffzelle,
**gekennzeichnet durch**
wenigstens eine Einrichtung (11) zur Reinigung der Ansaugluft, welche in einem Bereich vor dem Kathodenraum der wenigstens einen Brennstoffzelle (3) und/oder in einem Bereich vor einem Gaserzeugungssystem (5) des Brennsoffzellensystems angeordnet ist, und welche wenigstens ein Element (21) zur Adsorption von Kohlenwasserstoffen aufweist, und welche ein Ionenaustauscherelement (20) für Anionen und/oder Kationen aufweist.

2. Brennstoffzellensystem nach Anspruch 1,
**dadurch gekennzeichnet , daß**
das Ionenaustauscherelement (20) in Form einer Schüttung von Ionenaustauscherharzkugeln ausgebildet ist.

3. Brennstoffzellensystem nach Anspruch 1,
**dadurch gekennzeichnet, daß**
das Ionenaustauscherelement (20) in Form einer Beschichtung eines Ionenaustauscherharzes ausgebildet ist, welches auf einem Trägerelement mit großer Oberfläche angeordnet ist.

4. Brennstoffzellensystem nach Anspruch 1,
**dadurch gekennzeichnet , daß**
das Ionenaustauscherelement (20) als elektrostatisches Ionenaustauscherelement (20) ausgebildet ist.

5. Brennstoffzellensystem nach Anspruch 1,
**dadurch gekennzeichnet , daß**
das Ionenaustauscherelement (20) als kapazitives Ionenaustauscherelement (20) ausgebildet ist.

6. Brennstoffzellensystem nach einem der Ansprüche 1 bis 5,
**dadurch gekennzeichnet, daß**
die Einrichtung (11) zur Reinigung der Ansaugluft ein Aktivkohleelement (21) aufweist.

7. Brennstoffzellensystem nach Anspruch 6,
**dadurch gekennzeichnet, daß** die Einrichtung (11) zur Reinigung der Ansaugluft ein Gehäuse (19) aufweist, in welchem das Ionenaustauscherelement (20) und das Aktivkohleelement (21) in Form einer Schüttung angeordnet sind.

8. Brennstoffzellensystem nach Anspruch 6,
**dadurch gekennzeichnet , daß** das Ionenaustauscherelement (20) und das Aktivkohleelement (21) räumlich voneinander getrennt angeordnet sind.

9. Brennstoffzellensystem nach Anspruch 1,
**dadurch gekennzeichnet , daß** die Einrichtung (11) zur Reinigung der Ansaugluft eine semipermeable Membran (20) aufweist, welche für Ionen undurchlässig ist.

10. Brennstoffzellensystem nach Anspruch 1 oder 9,
**dadurch gekennzeichnet , daß**
die Einrichtung (11) zur Reinigung der Ansaugluft eine semipermeable Membran (21) aufweist, welche für Kohlenwasserstoffe undurchlässig ist.

11. Brennstoffzellensystem nach einem der Ansprüche 1 bis 10,
**dadurch gekennzeichnet, daß**
in Strömungsrichtung der Ansaugluft vor dem wenigstens einen Element (20,21) zur Adsorption von Ionen und/oder von Kohlenwasserstoffen ein Filterelement (24) zur Filterung von groben Verunreinigungen angeordnet ist.

12. Brennstoffzellensystem nach einem der Ansprüche 1 bis 11,
**dadurch gekennzeichnet, daß**
in Strömungsrichtung der Ansaugluft nach der Einrichtung (11) zur Reinigung der Ansaugluft ein Sensor (25) zur Messung der Anteile von Ionen und/oder Kohlenwasserstoffen in der Ansaugluft angeordnet ist.

## Claims

1. Fuel cell system for a motor vehicle, having at least one fuel cell, **characterized by** at least one device (11) for purifying the intake air, which is arranged in a region upstream of the cathode space of the at least one fuel cell (3) and/or in a region upstream of a gas generation system (5) of the fuel cell system, includes at least one element (21) for the adsorption of hydrocarbons and has an ion exchange element (20) for anions and/or cations.

2. Fuel cell system according to Claim 1, **characterized in that** the ion exchange element (20) is in the form of a bulk bed of ion exchange resin beads.

3. Fuel cell system according to Claim 1, **characterized in that** the ion exchange element (20) is in the form of a coating of an ion exchange resin which is arranged on a support element with a large surface area.

4. Fuel cell system according to Claim 1, **characterized in that** the ion exchange element (20) is designed as an electrostatic ion exchange element (20).

5. Fuel cell system according to Claim 1, **characterized in that** the ion exchange element (20) is designed as a capacitive ion exchange element (20).

6. Fuel cell system according to one of Claims 1 to 5, **characterized in that** the device (11) for purifying the intake air includes an activated carbon element (21).

7. Fuel cell system according to Claim 6, **characterized in that** the device (11) for purifying the intake air has a housing (19) in which the ion exchange element (20) and the activated carbon element (21) are arranged in the form of a bulk bed.

8. Fuel cell system according to Claim 6, **characterized in that** the ion exchange element (20) and the activated carbon element (21) are arranged spatially separate from one another.

9. Fuel cell system according to Claim 1, **characterized in that** the device (11) for purifying the intake air includes a semipermeable membrane (20) which does not allow ions to pass through.

10. Fuel cell system according to Claim 1 or 9,
**characterized in that** the device (11) for purifying the intake air includes a semipermeable membrane (21) which does not allow hydrocarbons to pass through.

11. Fuel cell system according to one of Claims 1 to 10, **characterized in that**, as seen in the direction of flow of the intake air, a filter element (24) for filtering out coarse impurities is arranged upstream of the at least one element (20, 21) for the adsorption of ions and/or of hydrocarbons.

12. Fuel cell system according to one of Claims 1 to 11, **characterized in that**, as seen in the direction of flow of the intake air, a sensor (25) for measuring the levels of ions and/or hydrocarbons in the intake air is arranged downstream of the device (11) for purifying the intake air.

## Revendications

1. Système de pile à combustible pour un véhicule automobile, comprenant au moins une pile à combustible,
**caractérisé par**
au moins un dispositif (11) pour purifier l'air d'admission, lequel est disposé dans une région avant l'espace de la cathode de l'au moins une pile à combustible (3) et/ou dans une région avant un système de génération de gaz (5) du système de pile à combustible, et qui présente au moins un élément (21) pour l'adsorption d'hydrocarbures, et qui présente un élément échangeur d'ions (20) pour anions et/ou cations.

2. Système de pile à combustible selon la revendication 1,
**caractérisé en ce que**
l'élément échangeur d'ions (20) est réalisé sous la forme d'une matière en vrac constituée de billes de résine échangeuse d'ions.

3. Système de pile à combustible selon la revendication 1,
**caractérisé en ce que** l'élément échangeur d'ions (20) est réalisé sous la forme d'un revêtement d'une résine échangeuse d'ions, qui est disposé sur un élément de support de grande surface.

4. Système de pile à combustible selon la revendication 1,
**caractérisé en ce que** l'élément échangeur d'ions (20) est réalisé sous la forme d'un élément échangeur d'ions électrostatique (20).

5. Système de pile à combustible selon la revendication 1,
**caractérisé en ce que** l'élément échangeur d'ions (20) est réalisé sous la forme d'un élément échangeur d'ions capacitif (20).

6. Système de pile à combustible selon l'une quelconque des revendications 1 à 5,
**caractérisé en ce que** le dispositif (11) de purification de l'air d'admission présente un élément au charbon actif (21).

7. Système de pile à combustible selon la revendication 6,
**caractérisé en ce que** le dispositif (11) de purification de l'air d'admission présente un boîtier (19) dans lequel sont disposés l'élément échangeur d'ions (20) et l'élément au charbon actif (21) sous la forme d'une matière en vrac.

8. Système de pile à combustible selon la revendication 6,
**caractérisé en ce que** l'élément échangeur d'ions (20) et l'élément au charbon actif (21) sont disposés de manière séparée spatialement l'un de l'autre.

9. Système de pile à combustible selon la revendication 1,
**caractérisé en ce que** le dispositif (11) de purification de l'air d'admission présente une membrane semi-perméable (20) qui est imperméable aux ions.

10. Système de pile à combustible selon la revendication 1 ou 9,
**caractérisé en ce que** le dispositif (11) de purification de l'air d'admission présente une membrane semi-perméable (21) qui est imperméable aux hydrocarbures.

11. Système de pile à combustible selon l'une quelconque des revendications 1 à 10,
**caractérisé en ce que** dans la direction d'écoulement de l'air d'admission avant l'au moins un élément (20, 21) pour l'adsorption d'ions et/ou d'hydrocarbures, on dispose un élément de filtre (24) pour la filtration d'impuretés grossières.

12. Système de pile à combustible selon l'une quelconque des revendications 1 à 11,
**caractérisé en ce que** dans la direction d'écoulement de l'air d'admission après le dispositif (11) de purification de l'air d'admission, on dispose un capteur (25) pour mesurer les proportions d'ions et/ou d'hydrocarbures dans l'air d'admission.
